# FASCICULE DE BREVET EUROPEEN

(11) **EP 0 953 745 B1**
(45) Date de publication et mention de la délivrance du brevet: **15.10.2003**
(21) Numéro de dépôt: 99400895.1
(22) Date de dépôt: 13.04.1999
(51) Int. Cl.: F02B 47/08, F02M 25/07

(54) **Procédé de combustion par auto-allumage contrôlé et moteur 4 temps associé avec conduit de transfert entre cylindres et soupape dédiée**
Überwachtes Selbstzündungsverbrennungsverfahren und zugehörige 4-Takt Brennkraftmaschine mit Transferleitung zwischen Zylinder und Ventil dafür
Controlled self-ignition combustion process and associated 4 stroke combustion engine with transfer conduit between cylinders and valve for it

(30) Priorité: 27.04.1998 FR 9805925
(43) Date de publication de la demande: 03.11.1999
(73) Titulaire: Institut Français du Pétrole, 92852 Rueil-Malmaison Cedex (FR)
(72) Inventeur: Dabadie, Jean-Charles, 92500 Rueil-Malmaison (FR); Lavy, Jacques, 78280 Guillancourt (FR)

(56) Documents cités:
- EP-A- 0 426 320
- DE-A- 3 903 474
- DE-C- 4 036 537
- FR-A- 2 078 819

## Description

La présente invention concerne les moteurs à combustion interne 4 temps à auto-allumage contrôlé.

L'auto-allumage contrôlé est un phénomène connu dans les moteurs 2 temps. Ce type de combustion présente des avantages au niveau des émissions de polluants : on obtient notamment de faibles émissions d'hydrocarbures et d'oxydes d'azote. En outre, une remarquable régularité cyclique est réalisée lors de la combustion en auto-allumage.

L'auto-allumage est un phénomène qui permet d'initier la combustion grâce à des gaz brûlés résiduels, qui restent dans la chambre de combustion après la combustion.

L'auto-allumage est réalisé en contrôlant la quantité de gaz résiduels et son mélange avec les gaz frais (non encore brûlés). Les gaz résiduels (gaz brûlés chauds) initient la combustion des gaz frais grâce à une combinaison de température et de présence d'espèces actives (radicaux).

Dans les moteurs 2 temps, la présence de gaz résiduels est "inhérente" à la combustion. En effet, lorsque la charge du moteur diminue, la quantité de gaz frais diminue ce qui entraîne une augmentation de la quantité de gaz résiduels (gaz brûlés du ou des cycles précédents qui ne sont pas sortis du cylindre). Le moteur 2 temps fonctionne donc avec une recirculation interne (ou EGR interne) des gaz brûlés à charge partielle. Toutefois, la présence de cet EGR interne n'est pas suffisante pour obtenir le fonctionnement souhaité en auto-allumage. Les travaux des chercheurs montrent aussi qu'il faut contrôler et limiter le mélange entre cet EGR interne et les gaz frais.

La technologie d'auto-allumage contrôlé appliquée au moteur quatre temps, est particulièrement intéressante car elle permet de faire fonctionner le moteur avec un mélange extrêmement dilué, avec des richesses très faibles et des émissions d'oxydes d'azote ultra faibles.

Cependant cette technologie se heurte à une difficulté technologique importante qui est le fait que pour l'obtenir sans bénéficier de l'effet EGR interne du moteur 2 temps, il est nécessaire soit d'augmenter très fortement le taux de compression du moteur (avec des problèmes de cliquetis à charge élevée), soit de réchauffer très fortement (plusieurs centaines de degrés C) les gaz frais admis, soit de combiner les deux phénomènes.

Des solutions pour diminuer les exigences en niveau de pression et de température pour les moteurs 4 temps peuvent partiellement être trouvées par le biais d'additifs appropriés dans le carburant. La demande de brevet française FR 2 738 594 illustre une solution de ce type.

Pour les moteurs 4 temps il est connu, par exemple par la demande internationale PCT, WO 93/16276 de combiner un calage variable de la distribution avec un système anti-retour à l'admission dans le but de diminuer les pertes par pompage à charge partielle. Cette solution permet alors de fonctionner avec le papillon d'admission le plus ouvert possible.

La demande de brevet français EN. 97/02.822 déposée au nom de la demanderesse décrit un contrôle de l'auto-allumage dans un moteur quatre temps. Plus précisément, ce document préconise, à charge partielle, de minimiser le mélange des gaz frais avec les gaz brûlés enfermés dans la chambre de combustion, en retardant le plus possible la fermeture de l'échappement. Il s'agit donc d'un recyclage "interne" qui permet de stratifier les gaz dans la chambre de combustion.

La demande de brevet EN. 97/11.279 déposée au nom du demandeur vise aussi à minimiser à charge partielle le mélange des gaz frais avec les gaz brûlés contenus dans la chambre de combustion, dans le but de contrôler et de favoriser la combustion en auto-allumage. Cependant cet art antérieur propose de transférer les gaz brûlés depuis l'échappement jusque dans l'admission via un conduit spécifique qui débouche juste en amont de la chambre de combustion, dans un conduit d'alimentation en air. La charge air frais-carburant est admise séparément et tardivement, via un deuxième conduit. Une introduction successive des charges est donc prévue.

Cependant cette solution crée une dilution très importante des gaz brûlés recyclés, par l'air, avant l'entrée dans la chambre de combustion, ce qui peut poser problème.

Il est également connu par le document DE-A- 4 036 537 de stocker sous pression les gaz d'échappement dans un accumulateur par un orifice spécifique prévu dans le moteur et de les introduire par ce même orifice dans la chambre de combustion pour comprimer l'air frais qui s'y trouve.

Cette disposition entraîne un refroidissement des gaz d'échappement et ne permet pas d'utiliser ces gaz pour favoriser l'autoallumage de l'air frais.

La présente invention vise à réaliser un auto-allumage contrôlé dans des moteurs 4 temps multi-cylindre qui soit très simple, donc fiable, de mise en oeuvre aisée et qui favorise au maximum la stratification des gaz brûlés dans la chambre de combustion. De plus les gaz brûlés conservent, selon l'invention, leur température ce qui est favorable à l'auto-combustion.

Ainsi la présente invention a pour objet un procédé de combustion par auto-allumage contrôlé d'un moteur 4 temps comprenant plusieurs cylindres ayant chacun au moins un premier moyen d'admission et au moins un premier moyen d'échappement.

Selon l'invention, le procédé consiste pendant le fonctionnement à charge partielle,
- à transférer, via au moins un orifice spécifique de chaque cylindre et un moyen de transfert approprié, des gaz d'échappement depuis un cylindre en phase d'échappement vers un autre cylindre en phase d'admission,
- à ouvrir l'orifice spécifique en même temps que l'ouverture du premier moyen d'échappement et à fermer ledit orifice en même temps que la fermeture du premier moyen d'admission.

Le procédé selon l'invention, consiste en outre à contrôler la répartition du débit des gaz d'échappement entre le premier moyen d'échappement et le moyen spécifique.

En outre, le procédé peut consister à isoler thermiquement et/ou à réchauffer les gaz d'échappement transférés dans ledit moyen de transfert approprié, afin d'améliorer encore l'auto-combustion.

Selon un mode de réalisation de l'invention, on utilise un conduit commun pour le transfert des gaz d'échappement

De façon particulière, à pleine et forte charges, on utilise le conduit commun et certains au moins des orifices spécifiques pour admettre une charge ou bien pour faire évacuer des gaz d'échappement.

Selon un autre mode de réalisation de l'invention, on utilise pour le transfert des gaz d'échappement cylindre à cylindre, un ensemble de conduits reliant les cylindres deux à deux.

La présente invention concerne en outre un moteur à combustion interne à 4 temps fonctionnant en auto-allumage contrôlé et comprenant plusieurs cylindres ayant chacun au moins un premier moyen d'admission et au moins un premier moyen d'échappement.

Conformément à l'invention, chaque cylindre comprend en outre au moins un moyen spécifique destiné au passage des gaz d'échappement depuis un cylindre en phase d'échappement vers un autre cylindre en phase d'admission ainsi qu'un moyen de transfert associé, pendant le fonctionnement à charge partielle, et le moyen spécifique est ouvert en même temps que l'ouverture du premier moyen d'échappement et est fermé en même temps que la fermeture du premier moyen d'admission.

Un moyen d'isolation thermique et/ou de chauffage du moyen de transfert peut par ailleurs être prévu sans sortir du cadre de l'invention.

De façon avantageuse, le moteur comprend en outre un moyen de répartition des gaz d'échappement entre le premier moyen d'échappement et le moyen spécifique, à charge partielle.

Le moyen de répartition des gaz d'échappement peut comprendre soit un premier moyen de vannage disposé à proximité du premier moyen d'échappement, soit un deuxième moyen de vannage placé près du moyen spécifique de passage des gaz, soit les deux vannages.

Selon un mode de réalisation, ledit moyen de transfert comprend un conduit commun qui débouche dans chacun des orifices spécifiques.

Avantageusement, ledit conduit commun présente en outre un orifice dans lequel débouche un conduit équipé d'un moyen de régulation du débit des gaz.

Conformément à un autre mode de réalisation de l'invention, le moyen de transfert comprend un ensemble de conduites reliant les cylindres deux à deux.

D'autres caractéristiques, détails, avantages de la présente invention apparaîtront mieux à la lecture de la description qui va suivre, faite à titre illustratif et nullement limitatif en référence aux dessins annexés sur lesquels :
- La figure 1 est une coupe schématique d'un mode de réalisation de l'invention;
- La figure 2 est un graphe donnant la loi de levée des soupapes sur un cycle;
- La figure 3 est une coupe schématique d'un autre mode de réalisation de l'invention.

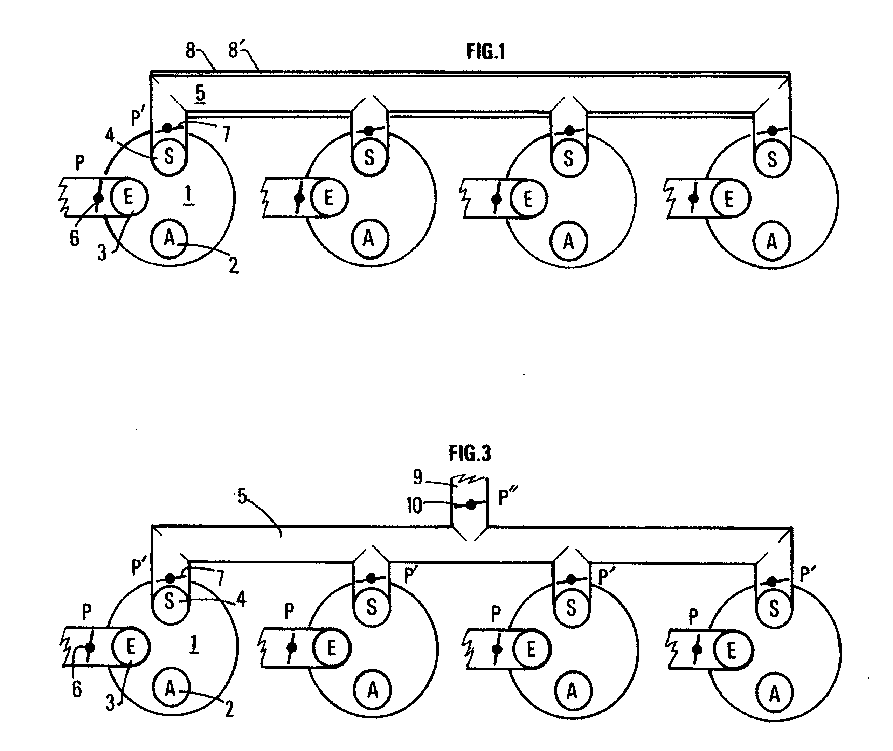

La figure 1 illustre le cas d'un moteur ayant quatre cylindres 1. L'invention s'applique en fait à tous les moteurs comportant au moins deux cylindres.

Chaque - cylindre 1 comprend au moins un premier moyen 2 d'admission d'une charge. Par un premier moyen 2 d'admission d'une charge, il faut ici comprendre un orifice d'admission auquel est associé une soupape.

Chaque cylindre comprend en outre un premier moyen d'échappement 3 constitué classiquement d'un orifice d'échappement et d'une soupape associée.

Par ailleurs, chaque cylindre 1 comprend un orifice spécifique 4 dans lequel débouche un conduit de transfert des gaz d'échappement. Une soupape coopère avec l'orifice spécifique 4.

Dans chaque cylindre, un premier moyen de vannage 6 est disposé à proximité du premier moyen d'échappement 3 ; tandis qu'un deuxième moyen de vannage 7 est placé près de l'orifice spécifique 4. Une commande appropriée et coordonnée de l'ouverture de chaque moyen de vannage 6, 7 permet de réguler et de répartir le débit des gaz entre l'échappement classique 3 et l'orifice spécifique 4.

Il est possible, sans sortir du cadre de l'invention, de n'envisager qu'un seul des deux vannages.

Chaque cylindre comprend donc au moins un orifice spécifique 4 qui coopère avec une soupape. Il peut en comprendre plusieurs. De même pour les moyens d'admission et d'échappement.

Les orifices 4 étant reliés au moyen de transfert, les gaz d'échappement ou un autre fluide peuvent y transitent lors d'un transfert d'un cylindre vers un autre cylindre.

Plus précisément, à charge partielle, des gaz d'échappement sont transférés depuis un cylindre en phase d'échappement vers un autre cylindre en phase d'admission.

Le tableau ci-dessous illustre les transferts ainsi réalisés sur un cycle, pour un moteur 4 cylindres.

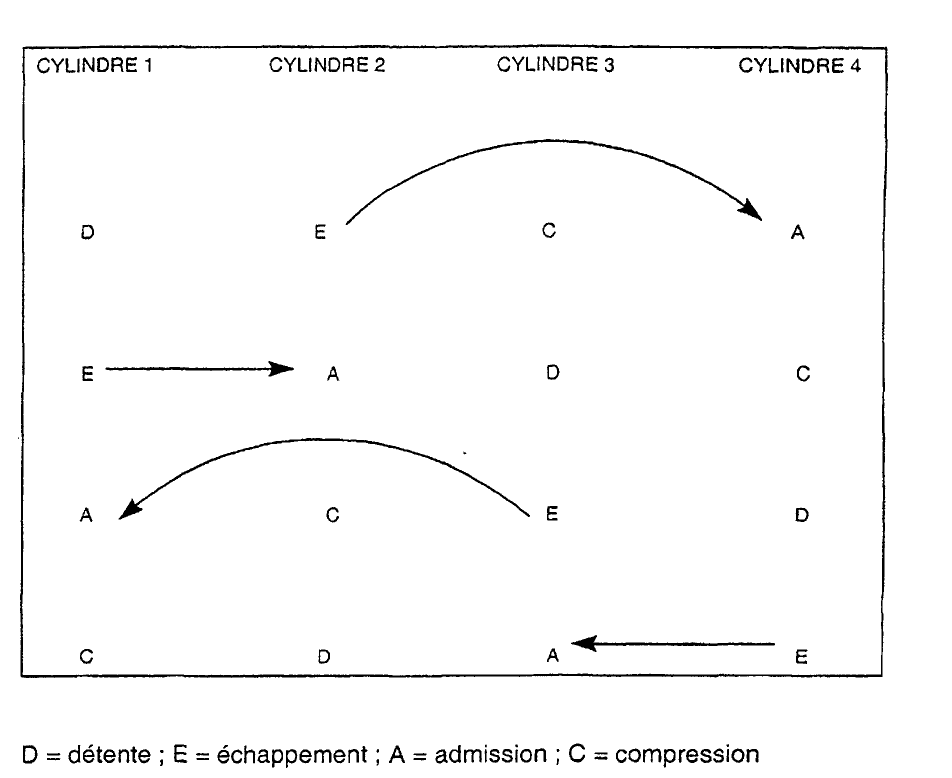

Autrement dit, à partir d'un orifice spécifique 4 d'un cylindre donné, une tubulure de transfert qui se dédouble est mise en place : l'une est dirigée vers l'orifice 4 d'un cylindre en retard de phase et elle permet le transfert du cylindre donné vers le cylindre en retard de phase ; la seconde tubulure aboutit sur le cylindre en avance de phase et elle permet le transfert des gaz d'échappement depuis le cylindre en avance vers le cylindre donné.

Si l'on considère des cylindres ayant chacun plusieurs orifices spécifiques 4, dans l'un au moins des orifices spécifiques aboutira une tubulure liée à un cylindre en retard de phase, et dans l'un au moins de l'autre ou des autres orifices spécifiques aboutira une tubulure liée à un cylindre en avance de phase.

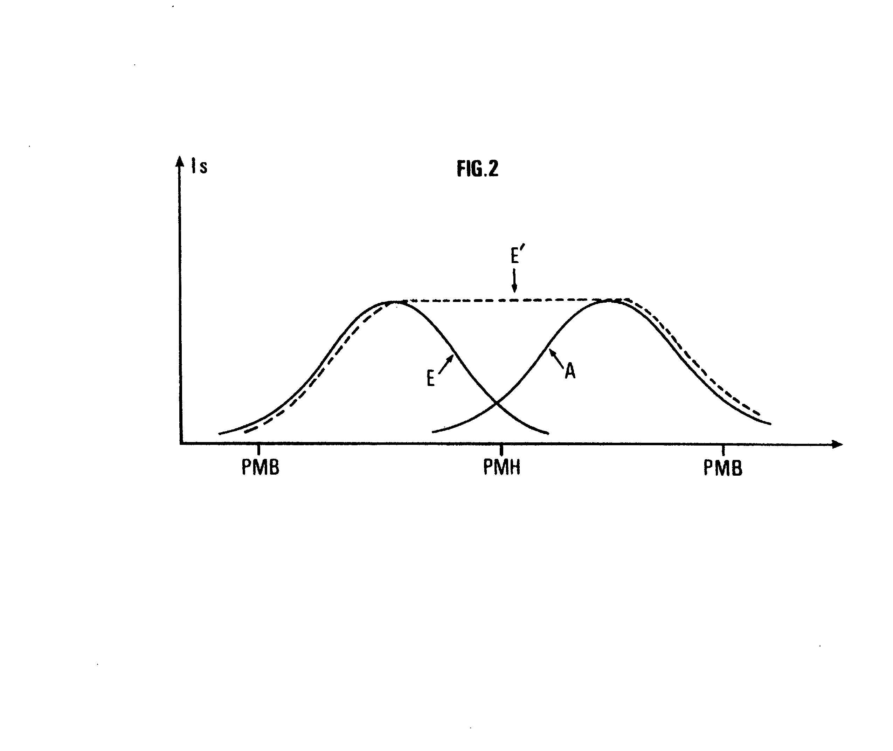

La loi de levée des soupapes dans un cylindre donné peut être celle de la figure 2 : la soupape d'échappement 3 suit la courbe E ; la soupape d'admission 2 suit la courbe A tandis que la soupape spécifique suit la courbe E' c'est-à-dire qu'elle s'ouvre en même temps que la soupape d'échappement mais ne se referme que lorsque la soupape d'admission se ferme. Ceci permet d'obtenir le transfert cylindre à cylindre selon l'invention.

Selon un mode de réalisation de l'invention, illustré par les figures 1 ou 3, le moyen de transfert comprend un conduit commun 5 qui débouche dans chacun des orifices spécifiques 4.

Il est encore envisageable, sans sortir du cadre de l'invention, de prévoir comme moyen de transfert un ensemble de conduites reliant les cylindres deux à deux, et qui permettent par exemple pour un moteur quatre cylindres, d'avoir les transferts selon le tableau ci-dessus.

De façon avantageuse, la ou les tubulures de transfert 5 peut être isolée thermiquement, à l'aide d'une céramique 8 par exemple. Elle peut aussi être chauffée par des moyens spécifiques 8'. Ainsi les gaz qui transitent dans une tubulure de transfert 5 ne perdent pas, voire gagnent des calories lorsqu'ils arrivent dans le cylindre. L'auto-inflammation est ainsi améliorée puisque l'on sait que la température des gaz recyclés est un paramètre important, qui favorise l'auto-allumage.

La figure 3 schématise un autre mode de réalisation de l'invention qui diffère de celui de la figure 1 par l'ajout d'une tubulure 9 qui débouche dans la tubulure commune 5. Un moyen de vannage 10 est préférentiellement disposé dans la tubulure 9, près de son débouché dans la tubulure commune 5.

A charge partielle, le fonctionnement est celui expliqué ci-avant. A pleine charge, le profil de levé de la soupape 4 peut être celui de la soupape d'admission (courbe A de la figure 2) avec le moyen 10 en position d'ouverture : ceci assure un remplissage optimum des cylindres.

Le profil de levée de la soupape 4 peut aussi, à pleine charge, être semblable à celui de la soupape d'échappement (courbe E de la figure 2), avec le moyen 10 ouvert afin d'assurer une vidange optimale du moteur. Autrement dit, selon ce mode de réalisation de l'invention, chaque soupape 4 est utilisée à pleine charge soit comme admission soit comme échappement. Cette caractéristique améliore donc la combustion pendant cette phase de fonctionnement. Bien entendu, à charge partielle, le moyen 10 est fermé de sorte que l'on se retrouve avec un fonctionnement tel que décrit en relation avec la figure 1.

Il convient de noter que le moyen 10 est un ajout totalement facultatif au mode de réalisation de la figure 1 car il permet essentiellement d'améliorer le fonctionnement à pleine charge.

## Revendications

1. Procédé de combustion par auto-allumage contrôlé d'un moteur 4 temps comprenant plusieurs cylindres (1) ayant chacun au moins un premier moyen d'admission (2) et au moins un premier moyen d'échappement (3), **caractérisé en ce qu'**il consiste, pendant le fonctionnement à charge partielle,
- à transférer, via au moins un orifice spécifique (4) de chaque cylindre (1) et un moyen de transfert approprié (5), des gaz d'échappement depuis un cylindre en phase d'échappement vers un autre cylindre en phase d'admission,
- à ouvrir l'orifice spécifique (4) en même temps que l'ouverture du premier moyen d'échappement (3) et à fermer ledit orifice en même temps que la fermeture du premier moyen d'admission (2).

2. Procédé selon la revendication 1, **caractérisé en ce qu'**il consiste en outre à contrôler la répartition du débit des gaz d'échappement entre le premier moyen d'échappement (3) et le moyen spécifique (4).

3. Procédé selon l'une quelconque des revendications précédentes, **caractérisé en ce qu'**il consiste à isoler thermiquement et/ou à réchauffer les gaz d'échappement transférés dans ledit moyen de transfert approprié.

4. Procédé selon l'une quelconque des revendications précédentes, **caractérisé en ce qu'**on utilise un conduit commun (5) pour le transfert des gaz d'échappement.

5. Procédé selon la revendication 4, **caractérisé en ce que**, à pleine et forte charges, on utilise le conduit commun (5) et certains au moins des orifices spécifiques (4) pour admettre une charge ou bien pour faire évacuer des gaz d'échappement.

6. Procédé selon l'une quelconque des revendications 1 à 3, **caractérisé en ce que** l'on utilise pour le transfert des gaz d'échappement cylindre à cylindre, un ensemble de conduits reliant les cylindres deux à deux.

7. Moteur à combustion interne à 4 temps fonctionnant en auto-allumage contrôlé et comprenant plusieurs cylindres (1) ayant chacun au moins un premier moyen d'admission (2) et au moins un premier moyen d'échappement (3), **caractérisé en ce que** chaque cylindre (1) comprend en outre au moins un moyen spécifique (4) destiné au passage des gaz d'échappement depuis un cylindre en phase d'échappement vers un autre cylindre en phase d'admission ainsi qu'un moyen (5) de transfert associé, pendant le fonctionnement à charge partielle et **en ce que** le moyen spécifique (4) est ouvert en même temps que l'ouverture du premier moyen d'échappement (3) et est fermé en même temps que la fermeture du premier moyen d'admission (2).

8. Moteur à combustion interne selon la revendication 7, **caractérisé en ce qu'**il comprend en outre un moyen d'isolation thermique (8) et/ou de chauffage (8') dudit moyen de transfert.

9. Moteur à combustion interne selon l'une quelconque des revendications 7 ou 8, **caractérisé en ce qu'**il comprend en outre un moyen (6, 7) de répartition des gaz d'échappement entre le premier moyen d'échappement (3) et le moyen spécifique (4), à charge partielle.

10. Moteur à combustion interne selon la revendication 9, **caractérisé en ce que** le moyen de répartition des gaz comprend un premier moyen de vannage (6) disposé à proximité du premier moyen d'échappement (3).

11. Moteur à combustion interne selon l'une quelconque des revendications 9 ou 10, **caractérisé en ce que** ledit moyen de répartition des gaz comprend un deuxième moyen de vannage (7) placé près du moyen spécifique de passage des gaz (4).

12. Moteur à combustion interne selon l'une quelconque des revendications 7 à 11, **caractérisé en ce que** ledit moyen de transfert comprend un conduit commun (5) qui débouche dans chacun des orifices spécifiques (4).

13. Moteur à combustion interne selon la revendication 12, **caractérisé en ce que** ledit conduit commun (5) présente en outre un orifice dans lequel débouche un conduit (9) équipé d'un moyen (10) de régulation du débit des gaz.

14. Moteur à combustion interne selon l'une quelconque des revendications 7 à 11, **caractérisé en ce que** ledit moyen de transfert comprend un ensemble de conduites reliant les cylindres deux à deux.

## Patentansprüche

1. Verbrennungsverfahren eines 4-Takt-Motors durch geregelte Selbstzündung mit mehreren Zylindern (1 ), von denen ein jeder wenigstens ein erstes Einlassmittel (2) und wenigstens ein erstes Auslassmittel (3) hat, **dadurch gekennzeichnet, dass** es während des Teillastbetriebs darin besteht,
a. über wenigstens eine spezifische Öffnung (4) jedes Zylinders und eine geeignete Transferleitung (5) Auslassgase von einem Zylinder in Auslassphase gegen einen anderen Zylinder in Einlassphase zu überführen,
b. das Öffnen der spezifischen Öffnung (4) gleichzeitig wie das Öffnen des ersten Auslassmittels (3) vorzunehmen und diese Öffnung gleichzeitig mit dem Schließen des ersten Einlassmittels (2) zu schließen.

2. Verfahren nach Anspruch 1, **dadurch gekennzeichnet, dass** es im übrigen darin besteht, die Verteilung des Durchsatzes der Auslassgase zwischen dem ersten Auslassmittel (3) und dem spezifischen Mittel (4) zu regeln.

3. Verfahren nach einem der vorhergehenden Ansprüche, **dadurch gekennzeichnet, dass** es darin besteht, thermisch die in dieses geeignete Transfermittel transferierten Auslassgase zu isolieren und/oder wieder zu erwärmen.

4. Verfahren nach einem der vorhergehenden Ansprüche, **dadurch gekennzeichnet, dass** man eine gemeinsame Leitung (5) für den Transfer der Auslassgase verwendet.

5. Verfahren nach Anspruch 4, **dadurch gekennzeichnet, dass** bei Voll- und Überlast man die gemeinsame Leitung (5) und wenigstens gewisse der spezifischen Öffnungen (4) verwendet, um eine Charge einzulassen oder um zu veranlassen, dass Auslassgase abgezogen werden.

6. Verfahren nach einem der Ansprüche 1 bis 3, **dadurch gekennzeichnet, dass** man für den Transfer der Auslassgase von Zylinder zu Zylinder eine Anordnung von Leitungen verwendet, welche die Zylinder zu je zwei verbinden.

7. 4-Takt-Brennkraftmaschine, die mit geregelter Selbstzündung arbeitet und mehrere Zylinder (1) umfasst, von denen ein jeder wenigstens ein erstes Einlassmittel (2) und wenigstens ein erstes Auslassmittel (3) hat, **dadurch gekennzeichnet, dass** jeder Zylinder (1 ) im übrigen wenigstens ein spezifisches Mittel (4) umfasst, das zum Durchgang der Auslassgase von einem Zylinder in Auslassphase zu einem anderen Zylinder in Einlassphase bestimmt ist sowie ein Mittel (5) zum zugeordneten Transfer während des Teillastbetriebes umfasst und dass das spezifische Mittel (4) gleichzeitig mit der Öffnung des ersten Auslassmittels (3) offen ist und gleichzeitig mit dem Schließen des ersten Einlassmittels (2) geschlossen ist.

8. Brennkraftmaschine nach Anspruch 7, **dadurch gekennzeichnet, dass** sie im übrigen ein Mittel zur thermischen Isolierung (8) und/oder zur Erwärmung (8') dieses Transfermittels umfasst.

9. Brennkraftmaschine nach einem der Ansprüche 7 oder 8, **dadurch gekennzeichnet, dass** sie im übrigen ein Mittel (6, 7) zur Verteilung der Auslassgase zwischen dem ersten Auslassmittel (3) und dem spezifischen Mittel (4) bei Teillast umfasst.

10. Brennkraftmaschine nach Anspruch 9, **dadurch gekennzeichnet, dass** das Verteilermittel für die Gase ein erstes Ventilmittel (6) umfasst, das benachbart dem ersten Auslassmittel (3) angeordnet ist.

11. Brennkraftmaschine nach einem der Ansprüche 9 oder 10, **dadurch gekennzeichnet, dass** dieses Verteilermittel für die Gase ein zweites Ventilmittel (7) umfasst, das benachbart dem spezifischen Mittel für den Durchsatz der Gase (4) angeordnet ist.

12. Brennkraftmaschine nach einem der Ansprüche 7 bis 11, **dadurch gekennzeichnet, dass** dieses Transfermittel eine gemeinsame Leitung (5) umfasst, die in jede der spezifischen Öffnungen (4) mündet.

13. Brennkraftmaschine nach Anspruch 12, **dadurch gekennzeichnet, dass** diese gemeinsame Leitung (5) im übrigen eine Öffnung umfasst, in welche eine Leitung (9) mündet, die mit einem Mittel (10) zur Steuerung des Durchsatzes der Gase ausgestattet ist.

14. Brennkraftmaschine nach einem der Ansprüche 7 bis 11, **dadurch gekennzeichnet, dass** dieses Transfermittel eine Anordnung von Leitungen umfasst, welche die Zylinder paarweise verbindet.

## Claims

1. Controlled self-ignition combustion process for a 4-stroke engine including a plurality of cylinders (1) each having at least a first induction means (2) and at least a first exhaust means (3), ***characterised by** the fact that* it consists, during operation at partial load,
- of transferring exhaust gases, via at least one specific orifice (4) of each cylinder (1) and a suitable transfer means (5), from a cylinder in the exhaust phase to another cylinder in the induction phase,
- of opening the specific orifice (4) simultaneously with opening of the first exhaust means (3) and of closing the said orifice simultaneously with closure of the first induction means (2).

2. Process as described in claim 1, ***characterised by** the fact that* it also consists of controlling the distribution of the flow of exhaust gases between the first exhaust means (3) and the specific means (4).

3. Process as described in any one of the preceding claims, ***characterised by** the fact that* it consists of thermally insulating and/or heating the exhaust gases transferred in the said suitable transfer means.

4. Process as described in any one of the preceding claims, ***characterised by*** the fact that a common pipe (5) is used for transfer of the exhaust gases.

5. Process as described in claim 4, ***characterised by** the fact that*, at full and heavy loads, the common pipe (5) and at least certain of the specific orifices (4) are used for induction of a charge or for evacuation of the exhaust gases.

6. Process as described in any one of claims 1 to 3, ***characterised by** the fact that* a set of pipes linking the cylinders in pairs is used for the transfer of the exhaust gases from cylinder to cylinder.

7. 4-stroke internal combustion engine operating with controlled self-ignition and including a plurality of cylinders (1) each having at least a first induction means (2) and at least a first exhaust means (3), **characterised by** *the fact that* each cylinder (1) also includes at least one specific means (4) intended for passage of the exhaust gases from a cylinder in the exhaust phase to another cylinder in the induction phase and an associated transfer means (5), during operation at partial load, and by the fact that the specific means (4) is opened simultaneously with the opening of the first exhaust means (3) and is closed simultaneously with closure of the first induction means (2).

8. Internal combustion engine as described in claim 7, **characterised by** *the fact that* it also includes a means for thermal insulation (8) and/or heating (8') of the said transfer means.

9. Internal combustion engine as described in either one of claims 7 or 8, ***characterised by** the fact that* it also includes a means (6, 7) for distribution of the exhaust gases between the first exhaust means (3) and the specific means (4), at partial load.

10. Internal combustion engine as described in claim 9, ***characterised by** the fact that* the means for distribution of the gases comprises a first valving means (6) arranged in the proximity of the first exhaust means (3).

11. Internal combustion engine as described in either one of claims 9 or 10, ***characterised by** the fact that* the said means for distribution of the gases comprises a second valving means (7) positioned close to the specific means for passage of the gases (4).

12. Internal combustion engine as described in any one of claims 7 to 11, **characterised by** *the fact that* the said transfer means comprises a common pipe (5) which opens into each of the specific orifices (4).

13. Internal combustion engine as described in claim 12, ***characterised by** the fact that* the said common pipe (5) also has an orifice into which opens a pipe (9) provided with a means (10) for adjusting the flow-rate of the gases.

14. Internal combustion engine as described in any one of claims 7 to 11, ***characterised by** the fact that* the said transfer means comprises a set of pipes linking the cylinders in pairs.
